# EUROPEAN PATENT APPLICATION

(11) **EP 3 644 597 A1**
(43) Date of publication of application: **29.04.2020**
(21) Application number: 19164263.6
(22) Date of filing: 21.03.2019
(51) Int. Cl.: H04N 5/225, H04N 5/232

(54) **IMAGING APPARATUS**

(30) Priority: 26.10.2018 JP 2018202031
(71) Applicant: Panasonic Intellectual Property Management Co., Ltd., Osaka-shi, Osaka 540-6207 (JP)
(72) Inventor: SUGINO, Katsuaki, Osaka-shi, Osaka 540-6207 (JP)
(74) Representative: Grünecker Patent- und Rechtsanwälte PartG mbB

(57) **Abstract**

An imaging apparatus is provided that can dissipate heat generated from an imaging sensor more effectively. An imaging apparatus includes an imaging sensor (45), a sensor substrate (46) on which the imaging sensor (45) is mounted, and a metal holder (42) having an outer shape larger than an outer shape of the imaging sensor (45). The sensor substrate (46) has an opening (46a) for exposing an exposed portion (45b) that is a part of a main surface of the imaging sensor (45). The metal holder (42) is configured to be in direct contact with the exposed portion (45b) through the opening (46a).

## Description

### BACKGROUND

### Technical Field

The present disclosure relates to an imaging apparatus.

### Related Art

Conventionally, as this type of imaging apparatus, one disclosed in JP 2016-19005 A is known, for example. JP 2016-19005 A discloses a configuration in which heat generated from an imaging sensor is transmitted to a heat radiation sheet metal via a sensor substrate, and is dissipated to a metal holder having an outer shape larger than that of the imaging sensor via the heat radiation sheet metal.

However, in a conventional imaging apparatus, there is still room for improvement from the viewpoint of more effectively dissipating heat generated from an imaging sensor.

### SUMMARY

An object of the present disclosure is to solve the issue described above, that is, to provide an imaging apparatus capable of more effectively dissipating heat generated from an imaging sensor.

An imaging apparatus according to the present disclosure is an imaging apparatus including
an imaging sensor,
a sensor substrate on which the imaging sensor is mounted, and
a metal holder having an outer shape larger than an outer shape of the imaging sensor, wherein
the sensor substrate has an opening for exposing an exposed portion that is a part of a main surface of the imaging sensor, and
the metal holder is configured to be in direct contact with the exposed portion through the opening.

According to the imaging apparatus of the present disclosure, the heat generated from the imaging sensor can be more effectively dissipated.

### BRIEF DESCRIPTION OF THE DRAWINGS

Fig. 1 is a perspective view of an imaging apparatus according to an embodiment as viewed from the front side.
Fig. 2 is a perspective view of the imaging apparatus of Fig. 1 as viewed from the rear side.
Fig. 3 is an exploded perspective view of a mount base and a camera shake correction unit included in the imaging apparatus of Fig. 1, as viewed from the front side.
Fig. 4 is an exploded perspective view of the camera shake correction unit included in the imaging apparatus of Fig. 1, as viewed from the rear side.
Fig. 5 is an assembled perspective view of the camera shake correction unit of Fig. 4 as viewed from the front side.
Fig. 6 is an assembled perspective view of the camera shake correction unit of Fig. 4 as viewed from the rear side.
Fig. 7 is a cross-sectional view taken along a line A1-A1 of Figs. 5 and 6.
Fig. 8 is a perspective view showing a state in which an imaging sensor unit is held by a metal holder.
Fig. 9 is a cross-sectional view taken along a line A2-A2 of Fig. 8.

### DESCRIPTION OF EMBODYMENTS

### (Findings underlying the present disclosure)

As a result of intensive studies to dissipate heat generated from an imaging sensor more effectively, the inventors obtained the following findings.

A conventional imaging apparatus is configured such that heat generated from an imaging sensor is transmitted to a heat dissipation sheet metal via other members such as a sensor substrate and adhesive, and is dissipated to a metal holder having an outer shape larger than that of the imaging sensor via the heat dissipation sheet metal. In this configuration, since other members and the heat dissipation sheet metal are interposed between the imaging sensor and the metal holder, the thermal resistance is large and the heat dissipation property is deteriorated.

On the other hand, the inventors have found a configuration in which an opening is provided in a sensor substrate so as to expose an exposed portion that is a part of the main surface of the imaging sensor, and a metal holder is directly brought into contact with the exposed portion through the opening. According to this configuration, it is possible to suppress an increase in the thermal resistance by eliminating the other members and the heat dissipation sheet metal, and greatly improve the heat dissipation property. Based on these novel findings, the inventors have reached the invention described below.

According to a first aspect of the present disclosure, there is provided a imaging apparatus including:
an imaging sensor,
a sensor substrate on which the imaging sensor is mounted, and
a metal holder having an outer shape larger than an outer shape of the imaging sensor, wherein
the sensor substrate has an opening for exposing an exposed portion that is a part of a main surface of the imaging sensor, and
the metal holder is configured to be in direct contact with the exposed portion through the opening.

According to a second aspect of the present disclosure, there is provided the imaging apparatus according to the first aspect, wherein the metal holder is in contact with a first region of the exposed portion and is bonded to a second region of the exposed portion via an adhesive.

According to a third aspect of the present disclosure, there is provided the imaging apparatus according to the second aspect, wherein the second region is adjacent to the first region and has an area smaller than that of the first region.

According to a fourth aspect of the present disclosure, there is provided the imaging apparatus according to the second or third aspect, wherein the second region is divided into a plurality of parts at symmetrical positions with respect to the center of the first region.

According to a fifth aspect of the present disclosure, there is provided the imaging apparatus according to any one of the second to fourth aspects, wherein the metal holder has a through hole at a position opposed to the second region, and the adhesive fills the through hole.

According to a sixth aspect of the present disclosure, there is provided the imaging apparatus according to the fifth aspect, wherein the adhesive is an ultraviolet curable adhesive.

According to a seventh aspect of the present disclosure, there is provided the imaging apparatus according to any one of the first to sixth aspects, further including
a fixed sheet metal fixed to an exterior member, and
a plurality of ball members rollably disposed between the metal holder and the fixed metal plate.

Hereinafter, an embodiment will be described in detail with reference to the drawings as appropriate. However, unnecessarily detailed description may be omitted. For example, detailed description of already well-known matters and redundant description on substantially the same configuration may be omitted. This is to avoid unnecessary redundancy of the following description and to facilitate understanding by those skilled in the art.

It should be noted that the inventors of the present invention provide the accompanying drawings and the following description to enable those skilled in the art to sufficiently understand the present disclosure. They are not intended to limit the subject matter recited in the claims.

In the following description, for convenience of explanation, terms indicating directions such as "upper", "lower", "left", "right", "front", "back", etc. are used assuming the state at the time of normal use. However, it does not mean to limit the use state or the like of the imaging apparatus of the present invention.

### (Embodiment)

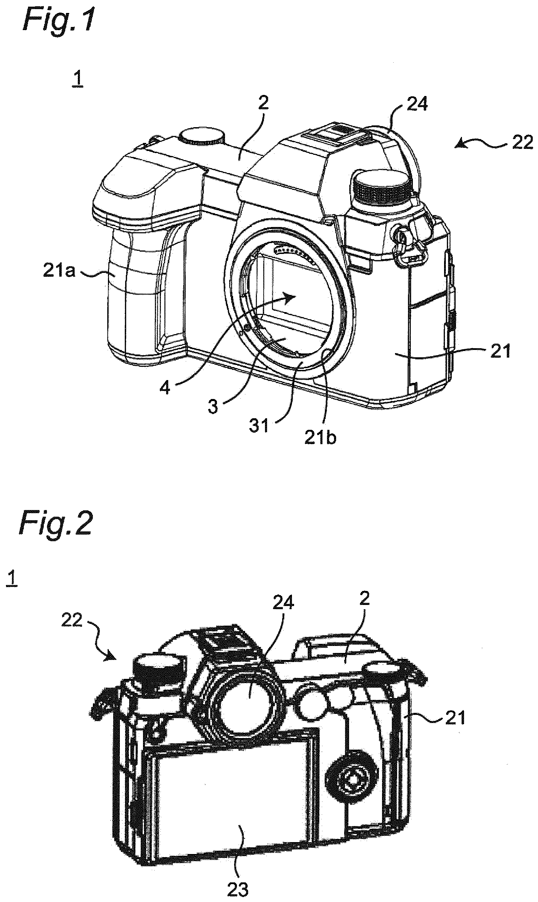

Fig. 1 is a perspective view of an imaging apparatus according to an embodiment as viewed from the front side. Fig. 2 is a perspective view of the imaging apparatus of Fig. 1 as viewed from the rear side.

In the embodiment, an imaging apparatus 1 is a digital camera of lens interchangeable type. The imaging apparatus 1 includes an apparatus body 2 and an interchangeable lens unit (not shown) to be attached to and detached from the apparatus body 2.

As shown in Fig. 1, the apparatus body 2 is provided with an exterior member 21 which is a casing in which various parts are accommodated or various parts are attached. On the exterior member 21, a grip portion 21a to be held by the right hand of an operator at the time of photographing is provided on the left side as viewed from the front. To the upper part of the exterior member 21, various parts 22 such as various buttons including a power button and a shutter button, a mode dial, a hot shoe, and the like are provided. The front surface of the exterior member 21 has a circular opening 21b.

As shown in Fig. 2, the rear surface of the exterior member 21 is provided with a display panel 23. The display panel 23 displays still images or moving images captured by the apparatus body 2, various types of setting information, and the like. The display panel 23 includes, for example, a liquid crystal monitor. A finder 24 is provided on an upper portion of the rear surface of the exterior member 21.

In the interior of the exterior member 21, a mount base 3 and a camera shake correction unit 4 are accommodated. Further, in the interior of the exterior member 21, a control circuit for controlling the whole camera, image processing, compression processing, data storage processing and the like, a circuit board on which a memory such as an SDRAM, a power supply circuit, and the like are mounted, and the like (not shown) are accommodated. Furthermore, a gyro sensor (not shown) for detecting a deflection state of the exterior member 21 is accommodated inside the exterior member 21.

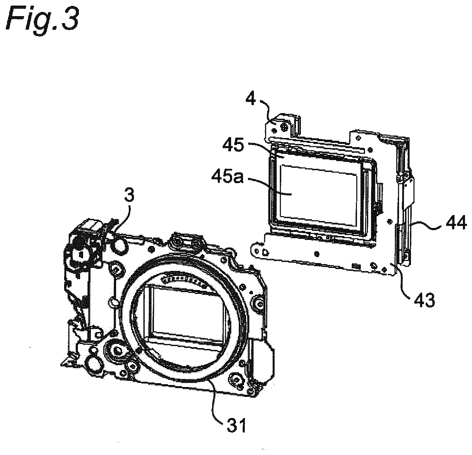

Fig. 3 is an exploded perspective view of the mount base 3 and the camera shake correction unit 4 as viewed from the front side.

The mount base 3 is directly or indirectly fixed to the front surface of the exterior member 21 so as to move integrally with the exterior member 21. The mount base 3 includes a ring-shaped mount 31 to which various types of interchangeable lens units can be attached and detached. The mount 31 is provided so as to be exposed to the outside through the opening 21b. The imaging apparatus 1 captures a still image or a moving image via a lens included in the interchangeable lens unit attached to the mount 31. The back side of the mount base 3 is provided with the camera shake correction unit 4.

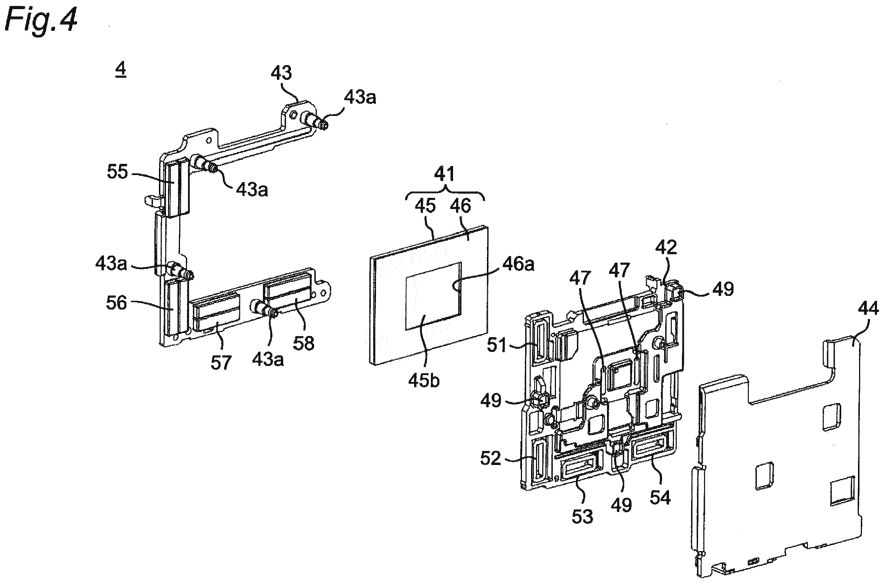

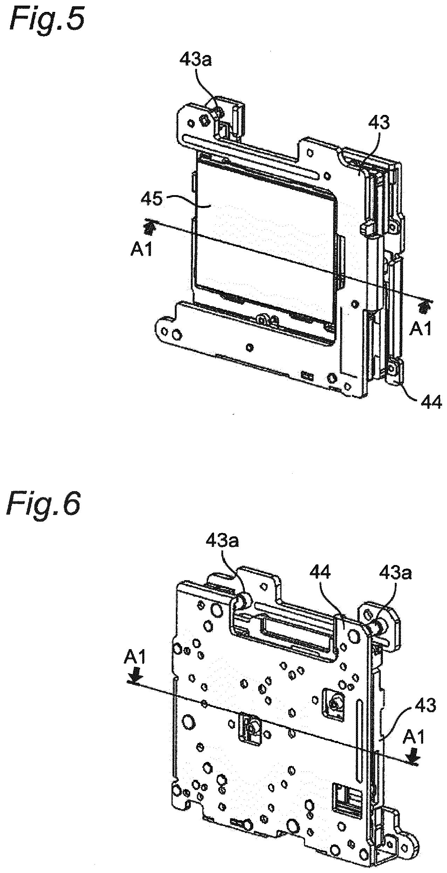

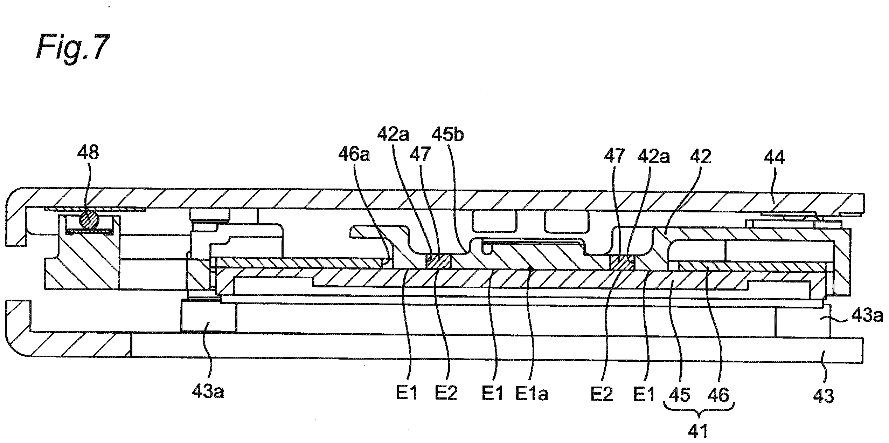

Fig. 4 is an exploded perspective view of the camera shake correction unit 4 as viewed from the rear side. Fig. 5 is an assembled perspective view of the camera shake correction unit 4 as viewed from the front side. Fig. 6 is an assembled perspective view of the camera shake correction unit 4 as viewed from the rear side. Fig. 7 is a cross-sectional view taken along a line A1-A1 of Figs. 5 and 6. In Fig. 4, the details are shown in a simplified manner in order to make the figure easy to see.

As shown in Fig. 4, the camera shake correction unit 4 includes an imaging sensor unit 41, a metal holder 42, and a pair of fixed sheet metals 43 and 44.

The imaging sensor unit 41 includes an imaging sensor 45 and a sensor substrate 46.

The imaging sensor 45 captures a subject image of a subject formed via the interchangeable lens unit to generate captured image data. The imaging sensor 45 is, for example, a Complementary Metal Oxide Semiconductor (CMOS) sensor. In the embodiment, the imaging sensor 45 is formed in a rectangular plate shape. As shown in Fig. 3, one main surface (front surface) of the imaging sensor 45 has a rectangular light receiving surface 45a that receives light made incident through the interchangeable lens unit.

The sensor substrate 46 is a rectangular substrate on which the imaging sensor 45 is mounted. The sensor substrate 46 is made of ceramic, for example. As shown in Fig. 4, the sensor substrate 46 has an opening 46a for exposing the exposed portion 45b which is a part of the other main surface (back surface) of the imaging sensor 45. In the embodiment, the opening 46a is provided in a rectangular shape at the center of the sensor substrate 46. Further, the exposed portion 45b is provided at a position facing the light receiving surface 45a. The vertical dimension of the imaging sensor 45 and the sensor substrate 46 is 37.9 mm, for example. The lateral dimension of the imaging sensor 45 and the sensor substrate 46 is 50.5 mm, for example. The vertical dimension of the opening 46a is 19.0 mm, for example. The lateral dimension of the opening 46a is 24.6 mm, for example.

The metal holder 42 holds the imaging sensor 45. The metal holder 42 has an outer shape larger than that of the imaging sensor 45 so that the metal holder 42 can hold the imaging sensor 45. That is, the metal holder 42 has an external shape of a size encompassing the imaging sensor 45 in a plan view. In the embodiment, the metal holder 42 has a substantially rectangular outer shape larger than that of the imaging sensor 45 and the sensor substrate 46 so that the imaging sensor unit 41 can be held.

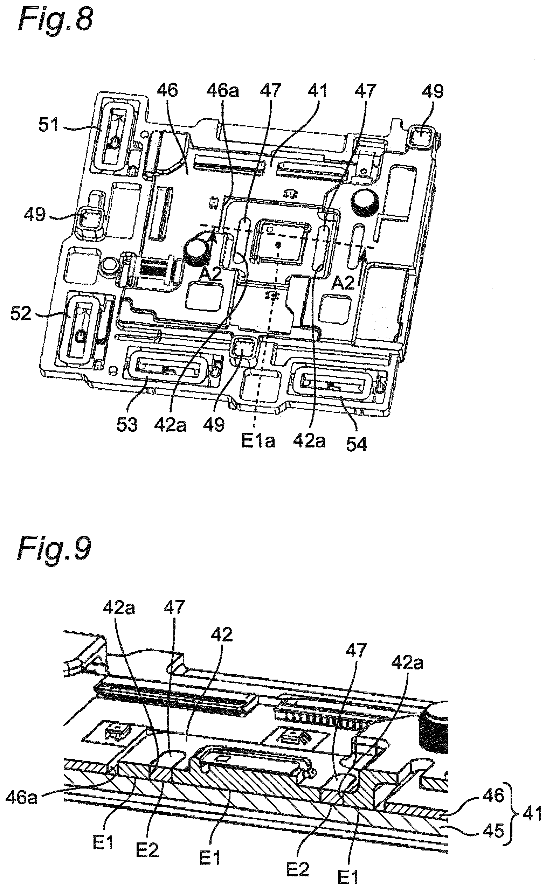

Fig. 8 is a perspective view showing a state in which the imaging sensor unit 41 is held by the metal holder 42. Fig. 9 is a cross-sectional view taken along a line A2-A2 in Fig. 8.

As shown in Figs. 7 and 9, the metal holder 42 is configured to be directly in contact with the exposed portion 45b through the opening 46a. In the embodiment, the metal holder 42 is in contact with a first region E1 of the exposed portion 45b and is bonded to a second region E2 of the exposed portion 45b via an adhesive 47. The second region E2 is set so as to be adjacent to the first region E1 and smaller in area than the first region E1.

In addition, the second region E2 is divided into a plurality of parts at symmetrical positions with respect to the center E1a of the first region E1. In the embodiment, the second region E2 is disassembled into two parts in a point symmetrical manner with respect to the center E1a of the first region E1.

As shown in Figs. 7 to 9, the metal holder 42 has a through hole 42a at a position facing the second region E2. In the embodiment, the metal holder 42 has two through holes 42a. Each of the through holes 42a is formed in a slit shape elongated vertically. These two through holes 42a are filled with the adhesive 47. In the embodiment, the adhesive 47 is an ultraviolet curable adhesive. The contact surface with the exposed portion 45b of the metal holder 42 is polished so that the surface accuracy is on the order of, for example, several tens of microns or less so that the surface accuracy is high.

As shown in Fig. 4, the metal holder 42 is provided with two laterally driving coils 51 and 52 along one side extending vertically. In addition, the metal holder 42 is provided with two vertically driving coils 53 and 54 along one side extending laterally.

As shown in Figs. 5 and 6, the imaging sensor unit 41 and the metal holder 42 are provided so as to be displaceable vertically and laterally between the fixed sheet metal 43 disposed on the front side and the fixed sheet metal 44 disposed on the back side. The fixed sheet metals 43 and 44 are fixed directly or indirectly to the exterior member 21 so as to move integrally with the exterior member 21. In the embodiment, the fixed sheet metal 43 is fixed to the mount base 3, and is indirectly fixed to the exterior member 21 via the mount base 3. The fixed sheet metal 44 is fixed to the fixed sheet metal 43 in such a manner that four pins 43a projecting from the rear surface of the fixed sheet metal 43 and dispersedly arranged on the rear surface thereof are inserted in receiving portions (not shown).

As shown in Fig. 7, a plurality of ball members 48 are provided rollably between the metal holder 42 and the fixed sheet metal 44. Each of the ball members 48 is made of, for example, a nonmagnetic material such as ceramics which has high wear resistance and is not affected by the magnetic force. The imaging sensor unit 41 and the metal holder 42 are provided so as to be displaceable vertically and laterally with respect to the fixed sheet metals 43 and 44 and the exterior member 21 by the rolling of the plurality of ball members 48.

As shown in Fig. 4, to the fixed sheet metal 43, permanent magnets 55, 56, 57, and 58 are attached at positions facing laterally driving coils 51 and 52 and the vertically driving coils 53 and 54, respectively. To the fixed sheet metal 44, permanent magnets (not shown) are attached at positions facing the permanent magnets 55, 56, 57, and 58, with the laterally driving coils 51 and 52 and the vertically driving coils 53 and 54 being interposed therebetween.

The laterally driving coils 51 and 52 and the permanent magnets 55 and 56 facing each other while sandwiching them generate a force to move the imaging sensor unit 41 and the metal holder 42 laterally. This force can be controlled by changing the current flowing in the laterally driving coils 51 and 52. In addition, the vertically driving coils 53 and 54 and the permanent magnets 57 and 58 facing each other while sandwiching them generate a force to move the imaging sensor unit 41 and the metal holder 42 vertically. This force can be controlled by changing the current flowing in the vertically driving coils 53 and 54. Further, by applying different currents to the laterally driving coil 51 and the laterally driving coil 52, a moment for rotating the imaging sensor unit 41 and the metal holder 42 can be generated. Further, by applying different currents to the vertically driving coil 53 and the vertically driving coil 54, a moment for rotating the imaging sensor unit 41 and the metal holder 42 can be generated.

When a gyro sensor (not shown) provided inside the exterior member 21 detects the shake of the exterior member 21, a control section (not shown) provided to the apparatus body 2 controls the current flowing through the laterally driving coils 51 and 52 and the vertically driving coils 53 and 54 based on an output signal of the gyro sensor. As a result, the imaging sensor unit 41 and the metal holder 42 are moved in a direction in which the shake of the exterior member 21 is canceled, and the shake of the subject image on the light receiving surface 45a of the imaging sensor 45 is corrected.

Further, the metal holder 42 is provided with a plurality of hall sensors 49. In the embodiment, the metal holder 42 has three hall sensors 49 provided dispersedly. By detecting changes in the magnetic force of the permanent magnets 55, 56, 57, and 58 by the three hall sensors 49, the relative position of the metal holder 42 with respect to the fixed sheet metals 43 and 44 can be detected.

According to the embodiment, the sensor substrate 46 is provided with the opening 46a for exposing the exposed portion 45b of the imaging sensor 45 so that the metal holder 42 is directly in contact with the exposed portion 45b through the opening 46a. According to this configuration, the heat generated from the imaging sensor 45 can be dissipated more effectively. As a result, it is also possible to make the amount of heat transfer from the imaging sensor 45 to the metal holder 42 about twice (for example, 0.466 W → 0.866 W) as compared with the conventional configuration.

In addition, according to the embodiment, the metal holder 42 is in contact with the first region E1 of the exposed portion 45b and is bonded to the second region E2 of the exposed portion 45b via the adhesive 47. According to this configuration, since the two are bonded at a position closer to the contact portion between the metal holder 42 and the imaging sensor 45, it is possible to more reliably maintain the contact state of the two, and to dissipate the heat generated by the imaging sensor 45 even more effectively. In addition, since the metal holder 42 and the imaging sensor 45 are configured to be bonded by the adhesive 47, it is possible to suppress deterioration of the performance due to application of the pressure to the imaging sensor 45, compared with a configuration in which the two are fixed by fastening members such as screws. Moreover, it is possible to suppress adhesion of the adhesive 47 to electronic components or the like mounted on the sensor substrate 46.

Furthermore, according to the embodiment, the second region E2 is set so as to be adjacent to the first region E1 and smaller in area than the first region E1. According to this configuration, since the area of the first region E1 where the metal holder 42 and the imaging sensor 45 are in contact is large, the heat generated from the imaging sensor 45 can be dissipated more effectively.

Further, according to the embodiment, the second region E2 is divided into a plurality of parts at symmetrical positions with respect to the center E1a of the first region E1. According to this configuration, it is possible to bond the metal holder 42 and the imaging sensor 45 strongly in a well-balanced manner, and it is possible to suppress deterioration of performance due to application of unbalanced pressure to the imaging sensor 45.

According to the embodiment, the metal holder 42 is provided with a through hole 42a at a position facing the second region E2, and the adhesive 47 fills the through hole 42a. According to this configuration, since the adhesive 47 is exposed to the outside, the adhesive 47 can be irradiated with light. Thereby, an ultraviolet curable adhesive can be used as the adhesive 47. Ultraviolet curable adhesive has a property of being cured in a short time of several seconds to several tens of seconds by irradiation with ultraviolet rays. Therefore, for example, when the metal holder 42 and the first area E1 of the exposed portion 45b of the imaging sensor 45 are brought into contact with each other, and the through hole 42a is filled with the ultraviolet curable adhesive, and with irradiation of ultraviolet rays for several seconds to several tens of seconds, they can be bonded. Thereby, the metal holder 42 and the imaging sensor 45 can be bonded with higher positioning accuracy, and it is possible to suppress deterioration of performance due to application of pressure to the imaging sensor 45.

In the above description, the adhesive 47 is an ultraviolet-curable adhesive, but the present invention is not limited thereto. For example, the adhesive 47 may be a thermosetting adhesive. In that case, the necessity of providing the through hole 42a in the metal holder 42 can be eliminated. For example, a dented portion (not shown) may be provided in the metal holder 42, and the dented portion may be filled with a thermosetting adhesive as the adhesive 47. Even in that case, the imaging sensor 45 and the metal holder 42 can be bonded.

In the above description, the second region E2 is decomposed into two in point symmetry with respect to the center E1a of the first region E1, but the present invention is not limited thereto. For example, the second region E2 may be decomposed into two in line symmetry with respect to a straight line passing through the center E1a of the first region E1. The second region E2 may be divided into three or more. The second regions E2 may be one. For example, the second region E2 may be annularly arranged so as to surround the first region E1.

As described above, the embodiment has been described as an example of the technology in the present disclosure. To that end, the accompanying drawings and the detailed description are provided. Accordingly, some of the constituent elements described in the accompanying drawings and the detailed description include not only essential constituent elements for solving the problem. Constituent elements not essential for solving the problem may also be included. For this reason, it should not be instantly recognized that these non-essential components are imperative as these non-essential components are described in the accompanying drawings and the detailed description.

Further, since the above-described embodiments are provided to illustrate the technique in the present disclosure, various modifications, replacements, additions, omissions, and the like can be made within the scope of the claims or their equivalents.

According to the imaging apparatus of the present disclosure, since heat generated from the imaging sensor can be dissipated more effectively, it is useful for an electronic apparatus having a photographing function such as a digital camera, a smartphone, a game machine, and the like.

## Claims

1. An imaging apparatus comprising:
an imaging sensor;
a sensor substrate on which the imaging sensor is mounted; and
a metal holder having an outer shape larger than an outer shape of the imaging sensor, wherein
the sensor substrate has an opening for exposing an exposed portion that is a part of a main surface of the imaging sensor, and
the metal holder is configured to be in direct contact with the exposed portion through the opening.

2. The imaging apparatus according to claim 1, wherein the metal holder is in contact with a first region of the exposed portion and is bonded to a second region of the exposed portion via an adhesive.

3. The imaging apparatus according to claim 2, wherein the second region is adjacent to the first region and has an area smaller than an area of the first region.

4. The imaging apparatus according to claim 2 or 3, wherein the second region is divided into a plurality of parts at symmetrical positions with respect to a center of the first region.

5. The imaging apparatus according to any one of claims 2 to 4, wherein
the metal holder has a through hole at a position opposed to the second region, and
the adhesive fills the through hole.

6. The imaging apparatus according to claim 5, wherein the adhesive is an ultraviolet curable adhesive.

7. The imaging apparatus according to claim 1; further comprising:
a fixed sheet metal fixed to an exterior member, and
a plurality of ball members rollably disposed between the metal holder and the fixed sheet metal.
